# EUROPÄISCHE PATENTSCHRIFT

(11) **EP 2 299 204 B1**
(45) Veröffentlichungstag und Bekanntmachung des Hinweises auf die Patenterteilung: **05.03.2014**
(21) Anmeldenummer: 10174048.8
(22) Anmeldetag: 25.08.2010
(51) Int. Cl.: F24J 2/52, H01L 31/042

(54) **Profilträger**
beam
poutre profilé

(30) Priorität: 25.08.2009 DE 202009011434 U; 19.11.2009 DE 202009015518 U
(43) Veröffentlichungstag der Anmeldung: 23.03.2011
(73) Patentinhaber: Sadef N.V., 8830 Hooglede-Gits (BE)
(72) Erfinder: Carbonez, Pierre, 8800 Roeselare (BE); Roose, Marc, 8400 Oostende (BE)
(74) Vertreter: Bird, William Edward

(56) Entgegenhaltungen:
- EP-A1- 1 039 549
- DE-U1-202008 015 017
- JP-A- 2006 193 976
- JP-A- 2008 196 230
- US-A1- 2009 194 098

## Beschreibung

Die Erfindung betrifft einen Profilträger für eine Stützstruktur, mit dessen Hilfe insbesondere Solarpanele gestützt werden können.

Um Solarpanele zu stützen, ist es bekannt einen C-förmigen einstückigen Profilträger zu verwenden, der einen unteren Unterflansch und einen oberen Oberflansch aufweist, wobei der Unterflansch und der Oberflansch als identisch zueinander geformte gerade Strecken ausgebildet sind und parallel zueinander angeordnet sind. Der Unterflansch und der Oberflansch sind über einen rechtwinkelig zum Unterflansch und zum Oberflansch verlaufenden Befestigungssteg verbunden. Der Profilträger wird als Querträger über den Unterflansch mit einem Längsträger verschraubt. Das Solarpanel wird mit dem Oberflansch verbunden. Durch den Unterflansch, den Oberflansch und den Befestigungssteg wird ein gegenüberliegend zum Befestigungssteg geöffneter Hohlraum begrenzt. Da die Solarpanele vergleichsweise hohen Windkräften ausgesetzt sind, wird zusätzlich ein Winkeleisen an einer Flanke mit dem Längsträger verschraubt und mit der anderen Flanke über zwei Verschraubungen mit dem Befestigungssteg verschraubt.

Nachteilig bei einem derartigen Profilträger ist, dass zur Erreichung einer ausreichenden mechanischen Stabilität für die Stützstruktur ein hoher Montageaufwand erforderlich ist. Ferner besteht ein beständiges Bedürfnis erforderliche Montagezeiten zu reduzieren und/oder die mechanische Stabilität zu verbessern.

Einen Profilträger gemäß dem Oberbegriff des Anspruchs 1 ist aus der DE202008015017 U bekannt.

Es ist die Aufgabe der Erfindung einen alternativen Profilträger für eine Stützstruktur zu schaffen, mit dessen Hilfe bei ausreichender mechanischer Stabilität ein geringer Montageaufwand möglich ist.

Die Lösung der Aufgabe erfolgt mit den Merkmalen des Anspruchs 1. Bevorzugte Ausgestaltungen der Erfindung sind in den Unteransprüchen angegeben.

Erfindungsgemäß wird ein Profilträger für eine Stützstruktur, insbesondere zum Stützen von Solarpanelen, geschaffen mit einem Unterflansch zur zumindest teilweisen Anlage an einen Unterträger, einem Oberflansch zur zumindest teilweisen Anlage an ein zu stützendes Bauteil, insbesondere Solarpanel und einem zur Kraftübertragung von dem Oberflansch zum Unterflansch vorgesehenen Befestigungssteg zur zumindest teilweisen Anlage an ein Verbindungsprofil zur Verbindung des Unterträgers mit dem Profilträger, wobei zwischen dem Befestigungssteg und dem Unterflansch ein Winkel α < 90° vorgesehen ist, dadurch gekennzeichnet, daß der Unterflansch, der Oberflansch und der Befestigungssteg einen gegenüberliegend zum Befestigungssteg geöffneten Hohlraum begrenzen, und der Befestigungssteg über einen Rücksprungsteg mit dem Oberflansch verbunden ist, so dass bei einem Neigungswinkel γ des Stützstegs zur Horizontalen von 5° ≤ γ ≤ 35°, insbesondere 15° ≤ γ ≤ 25°, bevorzugt γ = 20°± 2°, die Gewichtskraft des Schwerpunkts des Stützstegs in einer vom Unterflansch wegweisenden Richtung zu einer von dem Unterflansch wegweisenden Rückseite des Befestigungsstegs beabstandet verläuft.

Dadurch, dass der Winkel α zwischen dem Befestigungsprofil und dem Standprofil geringer als ein rechter Winkel ist und die Gewichtskraft des Schwerpunkts des Stützstegs rückseitig zum Unterflansch verläuft, kann auch bei einem durch plötzlichen Winddruck verursachtem elastischen Nachgeben des Befestigungsprofils und/oder des Verbindungsprofils erreicht werden, dass das Standprofil nicht nur reibschlüssig sondern auch formschlüssig von einem Verbindungselement, über welches das Standelement mit dem Unterträger verbunden sein kann, gehalten wird. Dies erhöht die mechanische Stabilität ohne den Montageaufwand zu erhöhen.

Die Resultierende der über den Oberflansch aufgenommenen Kräfte kann im Wesentlichen außerhalb des im Wesentlichen C- und/oder Sigma-förmigen Querschnitts des Profilträgers verlaufen. Dies ermöglicht es die auftretenden Kräfte nicht allein von dem Profilträger sondern auch von anderen Bauteilen, wie insbesondere dem Verbindungsprofil abtragen zu lassen. Der Rücksprungsteg kann insbesondere als Winkel ausgestaltet sein, der zwei Teilprofile aufweist, die insbesondere als reine Flachprofile ausgeformt sind. Insbesondere besteht der Rücksprungsteg aus genau zwei unter einem Winkel angeordneten Flachprofilen. Das obere Teilprofil, das insbesondere direkt, mit dem Oberflansch verbunden ist, kann vorzugsweise im Wesentlichen rechtwinkelig mit dem Oberflansch verbunden sein. Das untere Teilprofil, das insbesondere direkt, mit dem Befestigungssteg verbunden ist, kann vorzugsweise im Wesentlichen rechtwinkelig mit dem Befestigungssteg verbunden sein. Durch das untere Teilprofil und den Befestigungssteg kann eine Tasche ausgebildet, die insbesondere an die Kontur des Verbindungsprofils angepasst sein kann. Unpräzise ausgerichtete Verbindungsprofile fallen dadurch leichter auf und können einfacher korrigiert werden. Dies erleichtert die Montage und die Qualitätskontrolle der montierten Stützstruktur. Ferner kann bei einer elastischen Deformation des Rücksprungstegs bei einem Windstoss das untere Teilprofil an der Stirnseite des Verbindungsprofils anschlagen und dadurch automatisch versteift werden.

Dadurch, dass der Winkel α zwischen dem Befestigungssteg und dem Unterflansch geringer als ein rechter Winkel ist, wird bei einem durch plötzlichen Winddruck verursachtem elastischen Nachgeben des Befestigungsstegs und/oder des Verbindungsprofils erreicht, dass der Unterflansch nicht nur reibschlüssig sondern auch formschlüssig von einem Verbindungselement, über welches der Unterflansch mit dem Unterträger verbunden sein kann, gehalten wird. Dies erhöht die mechanische Stabilität ohne den Montageaufwand zu erhöhen. Hierbei wird die Erkenntnis ausgenutzt, dass bei einer Verschraubung und/oder Vernietung des Unterflanschs mit dem Unterträger etwas Spiel quer zur Befestigungsrichtung vorhanden ist und ein Formschluss erst dann eintritt, wenn eine Innenkante einer Durchgangsöffnung des Unterflanschs an der Schraube und/oder dem Niet anschlägt. Durch die Verringerung des Winkel α auf < 90°, würde bei einer plötzlichen Belastung des Befestigungsstegs und/oder des Verbindungsprofils in Folge eines Windstosses der Unterflansch versuchen von dem Unterträger abzuheben und dadurch sofort zu Beginn der Belastung an das verwendete Befestigungsmittel anschlagen. Die Nachgiebigkeit der Stützstruktur mit dem erfindungsgemäßen Profilträger wird verringert und eine zusätzliche Versteifung erreicht. Ein zusätzlicher Materialeinsatz ist nicht erforderlich. Die mechanische Integrität und Stabilität der Stützstruktur kann erhöht werden.

Insbesondere beträgt der Winkel α 45° ≤ α ≤ 89°, insbesondere 55° ≤ α ≤ 85°, vorzugsweise 60° ≤ α ≤ 80° und besonders bevorzugt 65° ≤ α ≤ 75°. Bei derartigen Winkeln für α lässt sich mit vergleichweise geringem Materialeinsatz für den Profilträger ein hinreichend großer Abstand zwischen dem Solarpanel und dem Unterträger erreichen. Gleichzeitig können der Befestigungssteg und/oder das Verbindungsprofil bei unterschiedlichen Neigungswinkeln γ gegen die Hangabtriebskraft des zu stützenden Bauteils geneigt sein und die entsprechenden Kräfte sicher abtragen ohne dabei elastisch oder plastisch deformiert zu werden.

Vorzugsweise weist der Unterflansch zu dem Oberflansch einen Abstand H auf und eine Erstreckung H_{E1} des Rücksprungstegs zwischen dem Unterflansch und dem Oberflansch beträgt 0,1 H ≤ H_{E1} ≤ 0,45 H und vorzugsweise 0,2 H ≤ H_{E1} ≤ H/3. Dadurch, dass die Höhe des Rücksprungstegs auf ungefähr ein Drittel der Gesamthöhe des Profilträgers begrenzt sein kann, ist es möglich im Wesentlichen auf halber Höhe das Verbindungsprofil mit dem Befestigungssteg zu verbinden.

In einer bevorzugten Ausführungsform ist der Oberflansch an einer vom Befestigungssteg wegweisenden Seite mit einem Stützansatz verbunden und zwischen dem Oberflansch und dem Stützansatz ist ein Winkel β vorgesehen, wobei der Winkel β im Wesentlichen dem Winkel α entspricht und/oder der Winkel β 45° ≤ β ≤ 89°, insbesondere 55° ≤ β ≤ 85°, vorzugsweise 60° ≤ β ≤ 80° und besonders bevorzugt 65° ≤ β ≤ 75° beträgt. Dies ermöglicht es für den Transport zwei Profilträger mit der offenen Seite des im Wesentlichen C- und/oder Sigma-förmigen Profils auf einander zu zu schieben und so die zwei Profilträger ineinander zu stecken. Dadurch wird das erforderliche Transportvolumen deutlich reduziert. Der Stützansatz des einen Profilträgers kann im zusammen geschobenen Zustand im Wesentlichen parallel zum Befestigungssteg angeordnet sein und insbesondere an dem Befestigungssteg anliegen. Ferner kann dadurch der Endgrat des Profilträgers im Bereich des Oberflanschs in das Innere des im Wesentlichen C- und/oder Sigma-förmigen Querschnitts des Profilträgers weisen, so dass die Gefahr einer Verletzung an dem Endgrat reduziert ist. Insbesondere ist der Unterflansch über einen Zwischensteg mit dem Befestigungssteg verbunden, wobei insbesondere zwischen dem Unterflansch und dem Zwischensteg ein Winkel δ von δ = 90°± 2° vorgesehen ist und vorzugsweise der Unterflansch zu dem Oberflansch einen Abstand H aufweist und eine Erstreckung H_{E2} des Zwischenstegs zwischen dem Unterflansch und dem Oberflansch H_{E2} ≤ H/3, insbesondere H_{E2} ≤ H/4 und vorzugsweise H_{E2} ≤ /10 beträgt. Durch den Zwischensteg wird erreicht, dass der etwas nach Innen weisende Befestigungssteg auf einer höheren Höhe beginnt. Dadurch verbleibt mehr Volumen innerhalb des im Wesentlichen C- und/oder Sigma-förmigen Querschnitts des Profilträgers, um mit einem Werkzeug, beispielsweise einem Maulschlüssel, ein Befestigungsmittel zur Verbindung des Unterflanschs mit dem Unterträger zu betätigen. Gleichzeitig ist die Höhe des Zwischenstegs nicht so hoch, dass die Kontaktfläche zwischen dem Verbindungsprofil und dem Befestigungssteg unnötig verringert ist.

Vorzugsweise weist der Oberflansch und/oder der Unterflansch eine Aufnahmetasche zur verliersicheren Aufnahme eines Hammerkopfs einer Hammerkopfschraubenverbindung auf. Durch die Aufnahmetasche kann die Mutter und/oder die Schraube einer Hammerkopfschraubenverbindung seitlich in die Aufnahmetasche eingeschoben werden und insbesondere drehfest in Aufnahmetasche eingesetzt sein, so dass eine einfache Montage mit einem Stützträger ("backrail") möglich ist. Hammerkopfschrauben können einen quaderförmigen Kopf besitzen, der vergleichbar zu einem Hammer geformt sein kann. Wenn die Hammerkopfschraube gedreht wird, kann die Hammerkopfschraube üblicherweise nicht mehr zurückgedreht werden, da der Hammerkopf zusätzlich mit einem Vierkant versehen sein kann. Hammerkopfschrauben können beispielsweise gemäß DIN 186, DIN 188 oder DIN 261 ausgestaltet sein. Bei der Montage ist es nicht erforderlich mit einem Werkzeug den Hammerkopf festzuhalten, so dass die Montage vereinfacht und beschleunigt ist, wodurch bei ausreichender mechanischer Stabilität ein geringer Montageaufwand möglich ist und insbesondere die erforderlichen Montagezeiten reduziert sind. Die Hammerkopfschraubenverbindung kann verliersicher in der Aufnahmetasche eingesetzt sein. Ferner kann eine Bewegbarkeit des Hammerkopfs in Längsrichtung des Profilträgers vorgesehen werden, so dass die Schraubenverbindung bei der Montage an die benötigte Stelle geschoben werden kann. Insbesondere kann der Profilträger mit in der Aufnahmetasche eingesetzten Hammerkopfmutter und/oder in der Aufnahmetasche eingesetzter Hammerkopfschraube ausgeliefert werden, so dass die erforderliche Anzahl an Hammerkopfschraubenverbindungen bereits vormontiert sein kann und die Montagezeit für die Verbindung mehrerer Profilträger bei einer Solarpanelanlage schneller erfolgen kann. Durch die Vormontage wird vermieden, dass Schraubenverbindungen verloren werden oder erst bei der Montage gesucht und zusammengetragen werden müssen. Gleichzeitig kann die Vormontage in einer trockenen Umgebung, insbesondere im Herstellerwerk, erfolgen, so dass der Anteil der Montagezeit im Freien reduziert werden kann. Witterungsbedingte Verzögerungen bei der Montage einer Solarpanelanlage können dadurch reduziert werden. Insbesondere kann die Aufnahmetasche durch spanloses Umformen hergestellt werden, wodurch sich eine zusätzliche Versteifung des Profilträgers ergibt. Die mechanische Stabilität des Profilträgers und der Stützstruktur wird dadurch erhöht. Insbesondere können der Unterflansch, der Oberflansch, der Befestigungssteg und/oder weitere Stege, die Teil des Profilträgers sind, als reine Flachprofile ausgestaltet sein. Ausgestanzte und/oder aus der jeweiligen Stegebene heraus gebogene Haltewinkel sind nicht erforderlich. Es ist ausreichend lediglich Aufnahmetaschen und/oder Durchgangsöffnungen für Befestigungsmittel vorzusehen. Ferner ist es möglich gegebenenfalls vorgesehene Durchgangsöffnungen durch die Befestigung einer fest mit dem jeweiligen Steg beziehungsweise Flansch verbundenen Stanzmutter zu erzeugen. Der Profilträger kann dadurch eine besonders einfache Geometrie aufweisen, die einfach und kostengünstig insbesondere durch Kaltumformverfahren realisiert werden kann. Ferner ermöglichen die großflächigen flachen Bereiche eine besonders großflächige Überlappung zwischen dem Unterflansch und dem Unterträger, zwischen dem Oberflansch und dem zu stützenden Bauteil, insbesondere Solarpanel, und/oder zwischen dem Befestigungssteg und dem Verbindungsprofil, das insbesondere als Winkeleisen ausgeformt ist. Dadurch werden große Kontaktflächen zur Weiterleitung hoher Kräfte geschaffen. Zusätzlich kann über die großen Kontaktflächen eine hohe Reibungskraft bereitgestellt werden, wodurch sich die mechanische Integrität und Stabilität erhöht. Insbesondere können die Kontaktflächen derart groß gewählt werden, dass der Profilträger allein über sein Eigengewicht eine so hohe Reibungskraft bereitstellt, dass der Profilträger ohne zusätzliche Haltevorrichtungen auch bei einem Neigungswinkel γ von 5° bis 35°, insbesondere 20° und vorzugsweise 30° sicher auf den Unterträgern steht ohne wegzurutschen. Die Montage des Profilträgers mit den mehreren Unterträgern kann dann von einem Monteur alleine ohne Hilfe von einer weiteren Person erfolgen, wodurch sich die Montagekosten reduzieren lassen.

Insbesondere weist die Aufnahmetasche eine Zugangsöffnung zum Hindurchführen eines Schraubenschafts auf, wobei die Zugangsöffnung durch einen Rücksprung zur Ausbildung eines Anschlags für den Hammerkopf ausgebildet sein kann. Die Zugangsöffnung kann derart dimensioniert sein, dass der Schraubenschaft der Hammerkopfschraubenverbindung mit deutlichem Spiel durch die Zugangsöffnung hindurchgesteckt werden kann. Gleichzeitig ist die Zugangsöffnung klein genug, dass der Hammerkopf nicht durch die Zugangsöffnung hindurchbewegt werden kann sondern an dem Rücksprung anschlägt. Dies führt zu einer Verliersicherung, so dass der Hammerkopf verliersicher in der Aufnahmetasche eingesetzt sein kann und lediglich seitlich eingesetzt und/oder entfernt werden kann. Gegebenenfalls kann die Aufnahmetasche seitlich mit einem Stopfen und/oder einem Abschlussprofil geschlossen werden, so dass auch ein seitliches Entfernen oder Verlieren des Hammerkopfs vermieden ist.

In einer bevorzugten Ausführungsform ist in der Aufnahmetasche der Hammerkopf einer Hammerkopfschraubenverbindung eingesetzt und ein Schraubenschaft der Hammerkopfschraubenverbindung durch die Zugangsöffnung hindurch geführt, wobei ein entlang des Schraubenschafts in axialer Richtung bewegliches Verdrehsicherungselement vorgesehen ist, wobei das Verdrehsicherungselement drehfest mit dem Hammerkopf verbindbar ist und drehfest in der Zugangsöffnung einsetzbar ist. Das Verdrehsicherungselement kann den Hammerkopf drehfest aufnehmen und drehfest in der Zugangsöffnung arretiert werden. Insbesondere kann das Verdrehsicherungselement auch eine Bewegung innerhalb der Zugangsöffnung sperren, so dass eine Fixierung des Hammerkopfs erfolgen kann, bevor die Schraubenverbindung angezogen wird. Das Verdrehsicherungselement kann als Kunststoffteil ausgestaltet sein und insbesondere durch Kunststoffspritzguss herstellbar sein. Das Verdrehsicherungselement kann einen oder mehrere Klipse aufweisen, über die das Verdrehsicherungselement mit dem Schraubenschaft und/oder mit der Zugangsöffnung verklippst werden kann.

Vorzugsweise ist die Aufnahmetasche spanlos, insbesondere durch Kaltbiegeverfahren, vorzugsweise Kaltprofilieren, Gesenkbiegen und/oder Kaltwalzen, herstellbar. Das Rohmaterial des Profilträgers kann als Coil angeliefert werden und nur durch Umformverfahren als Endlosmaterial hergestellt werden, wobei das Endlosmaterial auf die benötigte Länge abgetrennt werden kann.

Besonders bevorzugt erstreckt sich die Aufnahmetasche über die gesamte Länge des Profilträgers. Der Hammerkopf kann dadurch entlang der gesamten Länge des Profilträgers verschoben werden und an die jeweils benötigte Position bewegt werden. Der Profilträger kann ferner als Endlosmaterial hergestellt werden, wobei das Endlosmaterial auf die benötigte Länge abgetrennt werden kann. Dadurch wird die Herstellung des Profilträgers vereinfacht.

Besonders bevorzugt weist der Oberflansch und/oder der Unterflansch eine Nase zum Einsetzen in eine Aussparung eines Stützträgers insbesondere für Solarpanele auf. Durch die in die Aussparung einsetzbare Nase kann eine automatische Ausrichtung des Solarpanels beziehungsweise einer entsprechenden Unterstruktur erreicht werden, bevor die eigentliche Befestigung erfolgt. Dies ermöglicht eine einfache Montage mit einem Stützträger ("backrail"). Gleichzeitig kann auch in Anwesenheit von Wind montiert werden, wenn der auftretende Winddruck nicht ausreicht das Solarpanel beziehungsweise die entsprechende Unterstruktur soweit anzuheben, dass die Nase aus der Aussparung rutschen kann. Ferner können über die Nase Kräfte, insbesondere Hangabtriebskräfte, abgetragen werden. Vorzugsweise ist die Nase gegenüber dem Oberflansch und/oder dem Unterflansch derart abgewinkelt, dass in Richtung der Hangabtriebskraft eine zusätzliche Verkeilung des abzustützenden Bauteils zwischen der Nase und dem Oberflansch und/oder dem Unterflansch erfolgt, wodurch sich eine selbstverstärkende Befestigung ergibt. Die mechanische Stabilität des Profilträgers und der Stützstruktur wird durch die Nase erhöht. Dies führt zu einem Profilträger für eine Stützstruktur, mit dessen Hilfe bei ausreichender mechanischer Stabilität ein geringer Montageaufwand möglich ist. Insbesondere können der Unterflansch, der Oberflansch, der Befestigungssteg und/oder weitere Stege, die Teil des Profilträgers sind, als reine Flachprofile ausgestaltet sein. Ausgestanzte und/oder aus der jeweiligen Stegebene heraus gebogene Haltewinkel sind nicht erforderlich. Ferner ist es möglich gegebenenfalls vorgesehene Durchgangsöffnungen durch die Befestigung einer fest mit dem jeweiligen Steg beziehungsweise Flansch verbundenen Stanzmutter zu erzeugen. Der Profilträger kann dadurch eine besonders einfache Geometrie aufweisen, die einfach und kostengünstig insbesondere durch Kaltumformverfahren realisiert werden kann. Ferner ermöglichen die großflächigen flachen Bereiche eine besonders großflächige Überlappung zwischen dem Unterflansch und dem Unterträger, zwischen dem Oberflansch und dem zu stützenden Bauteil, insbesondere Solarpanel, und/oder zwischen dem Befestigungssteg und dem Verbindungsprofil, das insbesondere als Winkeleisen ausgeformt ist. Dadurch werden große Kontaktflächen zur Weiterleitung hoher Kräfte geschaffen. Zusätzlich kann über die großen Kontaktflächen eine hohe Reibungskraft bereitgestellt werden, wodurch sich die mechanische Integrität und Stabilität erhöht. Insbesondere können die Kontaktflächen derart groß gewählt werden, dass der Profilträger allein über sein Eigengewicht eine so hohe Reibungskraft bereitstellt, dass der Profilträger ohne zusätzliche Haltevorrichtungen auch bei einem Neigungswinkel γ von 5° bis 35°, insbesondere 20° und vorzugsweise 30° sicher auf den Unterträgern steht ohne wegzurutschen. Die Montage des Profilträgers mit den mehreren Unterträgern kann dann von einem Monteur alleine ohne Hilfe von einer weiteren Person erfolgen, wodurch sich die Montagekosten reduzieren lassen.

Insbesondere ist die Nase durch Kaltbiegeverfahren, vorzugsweise Kaltprofilieren, Gesenkbiegen und/oder Kaltwalzen, herstellbar. Das Rohmaterial des Profilträgers kann als Coil angeliefert werden und nur durch Umformverfahren als Endlosmaterial hergestellt werden, wobei das Endlosmaterial auf die benötigte Länge abgetrennt werden kann.

Vorzugsweise weist die Nase einen zum Hohlraum weisenden Ansatz auf, wobei der Ansatz eine Anschlagfläche zum Anschlagen an den Stützträger aufweist. Durch den mechanischen Kontakt zwischen dem Ansatz und dem Stützträger können über die Nase Kräfte, insbesondere Hangabtriebskräfte, abgetragen werden. Vorzugsweise ist die Nase gegenüber dem Oberflansch und/oder dem Unterflansch derart abgewinkelt, dass in Richtung der Hangabtriebskraft eine zusätzliche Verkeilung des Stützträgers zwischen der Nase und dem Oberflansch und/oder dem Unterflansch erfolgt, wodurch sich eine selbstverstärkende Befestigung ergibt. Die mechanische Stabilität des Profilträgers und der Stützstruktur wird durch den Ansatz der Nase erhöht. Ein derartiger Stützträger, mit dem Solarpanele verbunden werden können, wird auch als "backrail" bezeichnet. Vorzugsweise ist ein Solarpanel mit dem Stützträger ("backrail") durch Kleben verbunden. Eine Klebeverbindung ist besonders bevorzugt, wenn Dünnschicht-Solarpanels befestigt werden sollen.

Vorzugsweise ist genau ein erstes Verbindungsmittel zur Verbindung mit dem jeweiligen Unterträger, genau ein zweites Verbindungsmittel zur Verbindung mit dem jeweiligen Verbindungsprofil und insbesondere genau ein drittes Verbindungsmittel, maximal zwei dritte Verbindungsmittel zur Verbindung mit dem jeweiligen zu stützenden Bauteil, insbesondere Solarpanel, vorgesehen. Als Verbindungsmittel können insbesondere Hammerkopfschraubenverbindungen eingesetzt werden, bei denen der Hammerkopf der Schraube oder der Mutter in der Aufnahmetasche seitlich eingesetzt sein kann. Maximal drei Verbindungsmittel im Bereich eines Verbindungsprofils sind für eine sichere Befestigung ausreichend. Insbesondere ist es nicht erforderlich für die Verbindung des Verbindungsprofils mit dem Befestigungssteg zwei oder mehr Befestigungsmittel vorzusehen, um ein Ausbeulen unter Belastung zu vermeiden. Hierbei wird ausgenutzt, dass durch eine nicht rechtwinkelige Ausrichtung des Befestigungsstegs zum Unterflansch und zum Oberflansch eine bessere Kraftabtragung möglich ist, durch die maximale Biegemomente im Bereich des Befestigungsstegs vermieden werden können. Dieser Effekt wird durch den Rücksprungsteg verstärkt, da dadurch zusätzliche Biegestellen vorgesehen werden können, die zu einer zusätzlichen Versteifung des Profilträgers führen. Durch die Reduktion der Anzahl der Befestigungsmittel kann die Montage beschleunigt werden und die Herstellkosten gesenkt werden.

Besonders bevorzugt ist als Teil von Verbindungsmitteln zur Verbindung des Profilträgers mit dem Unterträger und/oder dem Verbindungsprofil und/oder dem zu stützenden Bauteil, insbesondere Solarpanel, eine in der Aufnahmetasche eingesetzte Hammkopfmutter und/oder Hammerkopfschraube vorgesehen. Da der Hammerkopf der Hammerkopfmutter und/oder der Hammerkopfschraube vorzugsweise drehfest mit dem Profilträger verbunden ist, ist es nicht erforderlich beim Montieren der Hammerkopfschraubenverbindung sowohl die Schraube als auch die Mutter mit einem Werkzeug festzuhalten. Insbesondere bei schwer zugänglichen Stellen ist die Montage erleichtert und/oder eine zweite Person für die Montage ist nicht erforderlich.

In einer bevorzugten Ausführungsform ist ein drittes federbelastetes Verbindungsmittel zur Verbindung des Oberflanschs mit dem zu stützenden Bauteil vorgesehen, wobei insbesondere eine Federkraft in Befestigungsrichtung zur Bereitstellung einer Klemmkraft oder eine Federkraft entgegen der Befestigungsrichtung zur Begrenzung der Befestigungskraft bereitgestellt wird. Durch die zusätzliche Klemmkraft kann beispielsweise das Solarpanel bereits mit etwas Federkraft festgehalten werden, so dass das Solarpanel bei der Montage nicht an dem insbesondere gegen die Horizontale geneigten Profilträger herunterrutschen kann. Durch die Federkraft entgegen der Befestigungsrichtung wird der Widerstand beim Anziehen einer Schraubenverbindung allmählich gesteigert, so dass intuitiv eine zu hohe auf das Solarpanel wirkende Haltekraft vermieden wird. Die Gefahr einer Beschädigung des Solarpanels wird dadurch reduziert. Insbesondere können beispielsweise mit Hilfe zwei unterschiedlicher Federn, die insbesondere eine unterschiedliche Federkonstante aufweisen, beide Varianten gleichzeitig bereitgestellt werden.

Insbesondere ist ein drittes Verbindungsmittel zur Verbindung des Oberflanschs mit dem zu stützenden Bauteil vorgesehen ist und das dritte Verbindungsmittel weist einen durch eine Durchführöffnung des Oberflanschs hindurch verlaufenden Haken zum Eingreifen in einen Stützträger insbesondere für Solarpanele auf. Der Haken kann insbesondere ebenfalls durch eine Durchführöffnung des Stützträgers hindurch verlaufen. Insbesondere kann eine Mehrzahl von Solarpanelen mit Hilfe der Stützträger vormontiert sein und als eine gemeinsame Baueinheit auf insbesondere mindestens zwei Profilträgern abgelegt werden. Der Haken kann bereits federbelastet sein und durch die Federkraft den Oberflansch festhalten, um anschließend mit Hilfe eines weiteren dritten Befestigungsmittel, das als Schraubenverbindung oder Nietverbindung ausgestaltet sein kann, die eigentliche mechanische Verbindung zur Übertragung von Kräften zwischen dem Oberflansch und dem Stützträger herbeizuführen. Ferner ist es möglich zuerst den Haken durch die Durchführungsöffnungen sowohl des Oberflanschs als auch des Stützträgers zu stecken und einen ersten Formschluss herbeizuführen, bevor der Haken mit dem dritten Befestigungsmittel befestigt wird. Das mit dem Haken verbundene dritte Befestigungsmittel ist insbesondere mit dem Rücksprungsteg verbunden. Ein derartiger Stützträger, mit dem Solarpanele verbunden werden können, wird auch als "backrail" bezeichnet. Vorzugsweise ist ein Solarpanel mit dem Stützträger ("backrail") durch Kleben verbunden. Eine Klebeverbindung ist besonders bevorzugt, wenn Dünnschicht-Solarpanels befestigt werden sollen.

Vorzugsweise ist ein drittes Verbindungsmittel zur Verbindung des Oberflanschs mit dem zu stützenden Bauteil vorgesehen und das dritte Verbindungsmittel weist mindestens einen Halter zur Anlage an einer entgegen der Schwerkraft weisenden Oberfläche des zu stützenden Bauteils, insbesondere Solarpanel, auf. Alternativ kann der Halter mit dem Stützträger verbunden sein. Durch den Halter kann mit Hilfe des insbesondere federbelasteten dritten Verbindungsmittels eine Haltekraft auf die im Wesentlichen nach oben weisende Oberfläche des Solarpanels auf den Profilträger und/oder auf den Stützträger aufgebracht werden. Gleichzeitig wird durch den Halter vermieden, dass durch Winddruck von unten ein Solarpanel abheben kann. Durch den Halter kann insbesondere zwischen zwei Solarpanelen ein Kanal ausgebildet werden, um Regenwasser abzuleiten und/oder Verbindungskabel zu den einzelnen Solarpanelen aufzunehmen. Das Solarpanel kann zusätzlich oder alternativ mit dem Stützträger ("backrail") verklebt sein.

Besonders bevorzugt ist der Oberflansch im Wesentlichen parallel zum Unterflansch angeordnet. Dadurch können mehrere Profilträger übereinander gelagert werden, wodurch sich die die Lagerhaltung erleichtert und weniger Lagerraum benötigt wird.

In einer besonders bevorzugten Ausführungsform ist der Profilträger einstückig aus Bandmaterial insbesondere durch Kaltbiegeverfahren, vorzugsweise Kaltprofilieren, Gesenkbiegen und/oder Kaltwalzen hergestellt. Das Rohmaterial des Profilträgers kann als Coil angeliefert werden und nur durch Umformverfahren als Endlosmaterial hergestellt werden, wobei das Endlosmaterial auf die benötigte Länge abgetrennt werden kann.

Insbesondere ist der Profilträger aus Aluminium oder beschichtetem, insbesondere galvanisiertem Stahl hergestellt. Dadurch ist der Profilträger witterungsbeständig und leicht.

Die Erfindung betrifft ferner eine Stützstruktur insbesondere zum Stützen von Solarpanelen, mit einem insbesondere als Längsträger verwendetem Unterträger, einem insbesondere als Querträger verwendetem Profilträger, der wie vorstehend beschrieben aus- und weitergebildet sein kann, wobei der Profilträger direkt mit dem Unterträger verbunden ist, und einem insbesondere als Winkeleisen ausgestaltetes Verbindungsprofil, wobei das Verbindungsprofil direkt mit dem Unterträger und direkt mit dem Befestigungssteg des Profilträgers verbunden ist. Durch die Aufnahmetasche kann die Mutter und/oder die Schraube einer Hammerkopfschraubenverbindung seitlich in die Aufnahmetasche eingeschoben werden und insbesondere drehfest in der Aufnahmetasche eingesetzt sein. Bei der Montage ist es nicht erforderlich mit einem Werkzeug den Hammerkopf festzuhalten, so dass die Montage vereinfacht und beschleunigt ist, wodurch bei ausreichender mechanischer Stabilität ein geringer Montageaufwand möglich ist und insbesondere die erforderlichen Montagezeiten reduziert sind.

Insbesondere ist mit dem Oberflansch des Profilträgers ein Solarpanel oder ein mit einem Solarpanel verbundener Stützträger verbunden. Das Solarpanel ist insbesondere mit dem Stützträger verklebt und/oder als Dünnschicht-Solarpanel ausgestaltet. Die Stützstruktur kann dadurch durch Solarthermie und/oder Photovoltaik Energie erzeugen.

Besonders bevorzugt weist der Stützträger eine Aussparung zum zumindest teilweisen Aufnehmen des Oberflanschs, insbesondere einer Nase des Oberflanschs, auf. Durch den mechanischen Kontakt zwischen der Nase und dem Stützträger im Bereich der Aussparung können über die Nase Kräfte, insbesondere Hangabtriebskräfte, abgetragen werden. Vorzugsweise ist die Nase gegenüber dem Oberflansch und/oder dem Unterflansch derart abgewinkelt, dass in Richtung der Hangabtriebskraft eine zusätzliche Verkeilung des Stützträgers zwischen der Nase und dem Oberflansch und/oder dem Unterflansch erfolgt, wodurch sich eine selbstverstärkende Befestigung ergibt. Die mechanische Stabilität des Profilträgers und der Stützstruktur wird durch die Nase in der Aussparung erhöht.

Vorzugsweise ist das Verbindungsprofil über genau einen Befestigungspunkt mit dem Unterträger verbunden. Da durch die geometrische Ausgestaltung des Profilträgers das Risiko einer Drehung des Verbindungsprofils um den Befestigungspunkt zumindest reduziert ist, ist es nicht erforderlich das Verbindungsprofil über zwei Befestigungspunkte mit dem Unterträger zu verbinden. Durch die reduzierte Anzahl der Befestigungsmittel, ist der Montageaufwand reduziert.

Besonders bevorzugt ist der Unterträger um einen Neigungswinkel γ zur Horizontalen von insbesondere 5° ≤ γ ≤ 35°, vorzugsweise 15° ≤ γ ≤ 25°, besonders bevorzugt γ = 20°± 2° geneigt und der Befestigungssteg ist entgegen der Hangabtriebskraft des zu stützenden Bauteils, insbesondere Solarpanels, geneigt. Die Hangabtriebskraft des zu stützenden Bauteils bei einer gegenüber der Horizontalen geneigten Anordnung, wie sie bei Solarpanelen üblich ist, kann dadurch über den Befestigungssteg und das Verbindungsprofil an den Unterträger abgetragen werden.

Insbesondere ist das Verbindungsprofil im Wesentlichen vertikal ausgerichtet ist. Dies ermöglicht es weitere Bauelemente, die üblicherweise vertikal oder horizontal ausgerichtet sind, über das Verbindungsprofil mit der Stützstruktur zu verbinden. Ferner wird durch die vertikale Ausrichtung der ästhetische Eindruck verbessert. Ferner kann ein Monteur mit Hilfe seines Gleichgewichtssinns die Schwerkraftrichtung leicht erfassen und ein nicht vertikal ausgerichtetes Verbindungsprofil ohne Schwierigkeiten erkennen. Das nicht vertikale Verbindungsprofil indiziert eine nicht korrekte Ausrichtung der Stützstruktur in diesem Bereich und erleichtert die Fehlerfindung und Fehlerkorrektur während der Montage.

Die Erfindung betrifft ferner eine Solarpanelanlage zur Nutzung von Solarenergie, mit einer Stützstruktur, die wie vorstehend beschrieben aus- und weitergebildet sein kann, und einem mit der Stützstruktur, insbesondere durch Kleben, verbundenes Solarpanel, vorzugsweise Dünnschicht-Solarpanel. Aufgrund der montagefreundlichen Ausgestaltung des Profilträgers der Stützstruktur ist bei ausreichender mechanischer Stabilität ein geringer Montageaufwand möglich, wobei insbesondere die erforderlichen Montagezeiten reduziert sind.

Das Dünnschicht-Solarpanel weist insbesondere eine dünne photoelektrische Schicht auf, die vorzugsweise aus amorphem Silizium besteht und/oder eine Schichtdicke s von 5 µm ≤ s ≤ 200 µm, insbesondere 10 µm ≤ s ≤ 100 µm aufweist. Das Solarpanel kann ein Trägermedium aufweisen, auf das die photoelektrische Schicht aufgebracht ist. Die photoelektrische Schicht kann auf ein starres Trägermedium, beispielsweise Glas, und/oder auf ein flexibles Trägermedium, beispielsweise eine Kunststofffolie, aufgebracht sein. Zur Verbindung des Solarpanel mit dem Stützträger ("backrail") weist der Stützträger insbesondere an dem Solarpanel flächig anliegende Stützflächen auf.

Nachfolgend wird die Erfindung unter Bezugnahme auf die anliegenden Zeichnungen anhand bevorzugter Ausführungsbeispiele exemplarisch erläutert.

Es zeigen:
Fig. 1: eine vereinfachte schematische Schnittansicht einer Stützstruktur,
Fig. 2a: eine schematische Schnittansicht einer ersten Ausführungsform eines Profilträgers der Stützstruktur aus Fig. 1,
Fig. 2b: eine schematische Schnittansicht einer zweiten Ausführungsform eines weiteren Profilträgers der Stützstruktur aus Fig. 1,
Fig. 3: eine vereinfachte schematische Schnittansicht von zwei für den Transport zusammengelegten Profilträgern,
Fig. 4: eine vereinfachte schematische Schnittansicht einer dritten Ausführungsform des Profilträgers,
Fig. 5: eine vereinfachte schematische Schnittansicht einer vierten Ausführungsform des Profilträgers,
Fig. 6: eine vereinfachte schematische Schnittansicht einer fünften Ausführungsform des Profilträgers,
Fig. 7: eine vereinfachte schematische perspektivische Ansicht des Stützträgers aus Fig. 6,
Fig. 8: eine vereinfachte schematische perspektivische Ansicht eines mit dem Profilträger verbindbaren Stützträgers,
Fig. 9: eine schematische perspektivische Ansicht einer Hammerkopfverschraubung,
Fig. 10a: eine schematische Schnittansicht eines Profilträgers mit Nase in einer ersten Ausführungsform,
Fig. 10b: eine schematische Schnittansicht eines Profilträgers mit Nase in einer zweiten Ausführungsform,
Fig. 10c: eine schematische Schnittansicht eines Profilträgers mit Nase in einer dritten Ausführungsform,
Fig. 11: eine schematische teilgeschnittene Seitenansicht einer Stützstruktur mit dem Profilträger aus Fig. 10a,
Fig. 12: eine schematische teilgeschnittene Seitenansicht einer Stützstruktur mit einem Profilträger in einer weiteren Ausführungsform und
Fig. 13: eine schematische perspektivische Ansicht einer Stützstruktur in einer weitren Ausführungsform.

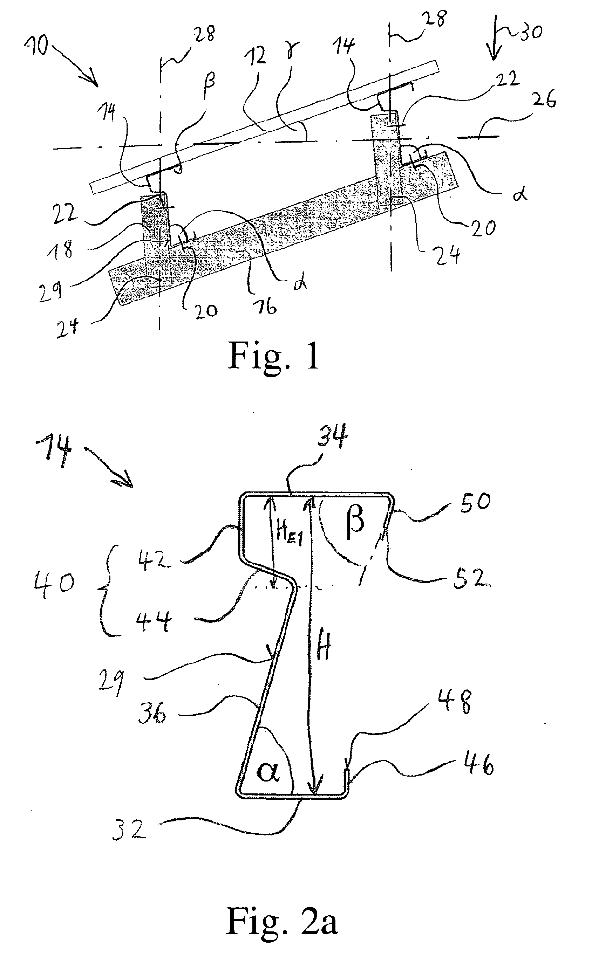

Die in Fig. 1 dargestellte Stützstruktur 10 weist ein Solarpanel 12 auf, das über als Querträger verwendete Profilträger 14 mit als Längsträger verwendeten Unterträgern 16 verbunden ist. Die Profilträger 14 sind jeweils über ein als Winkeleisen ausgeformtes Verbindungsprofil 18 mit dem jeweiligen Unterträger 16 verbunden. Ferner sind die Profilträger 14 jeweils über genau ein erstes Verbindungsmittel 20 mit dem jeweiligen Unterträger 16 verbunden, wobei das erste Verbindungsmittel 20 als Schraubenverbindung und/oder als Nietverbindung ausgebildet sein kann. Vorzugsweise ist das Verbindungsmittel 20 als Hammerkopfschraubenverbindung ausgestaltet. Über genau ein zweites Verbindungsmittel 22, das insbesondere als Schraubenverbindung und/oder als Nietverbindung und/oder Hammerkopfschraubenverbindung ausgebildet sein kann, ist der Profilträger 14 mit dem jeweiligen Verbindungsprofil 18 verbunden. Das jeweilige Verbindungsprofil 18 ist über genau einen Befestigungspunkt 24 mit dem Unterträger 16 verbunden. Im dargestellten Ausführungsbeispiel ist das Solarpanel 12 und somit auch die Profilträger 14 und die Unterträger 16 gegenüber einer Horizontalen 26 um einen Neigungswinkel γ = 20° geneigt. Die Geometrie des Profilträgers 14 ist derart ausgestaltet, dass eine Resultierende 28 der von oben auf den jeweilige Profilträger 14 wirkenden Kräfte in Schwerkraftrichtung 30 im Wesentlichen an einer Rückseite 29 des Profilträgers 14 vorbei durch den Befestigungspunkt 24 des Verbindungsprofils 18 verläuft. Dadurch ist eine elastische Drehung des Verbindungsprofils 18 um den Befestigungspunkt 24 durch plötzliche Windlasten an dem Solarpanel 12 vermieden.

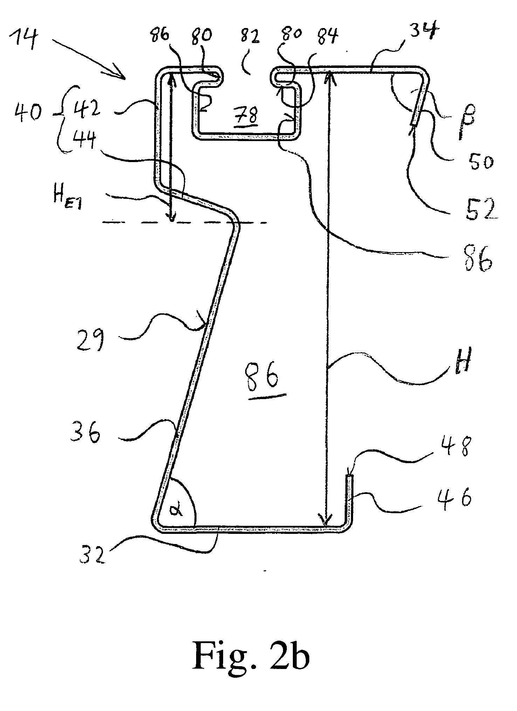

Wie in Fig. 2a und Fig. 2b dargestellt weist der einstückige durch Kaltprofilieren hergestellte Profilträger 14 einen Unterflansch 32 auf, um den Profilträger 14 flächig auf den Unterträger 16 setzen zu können. Im Wesentlichen parallel zum Unterflansch 32 ist ein Oberflansch 34 im Abstand H vorgesehen, der flächig an dem zu stützenden Bauteil, insbesondere das Solarpanel 12, anliegt, um die auftretenden Kräfte abtragen zu können. Zur Befestigung mit dem Verbindungsprofil 18 ist ein Befestigungssteg 36 vorgesehen, der unter einem Winkel α = 75° zum Unterflansch 32 angeordnet ist. Der Befestigungssteg 36 kann flächig an dem Verbindungsprofil 18 anliegen. Der Befestigungssteg 36 ist über einen Rücksprungsteg 40 mit dem Oberflansch 34 verbunden, um einen zu starken Versatz des Oberflanschs 34 zum Unterflansch 32 zu vermeiden. Im dargestellten Ausführungsbeispiel ist der Rücksprungsteg 40 winkelig ausgeführt und weist eine Erstreckung zwischen dem Unterflansch 32 und dem Oberflansch 34 von H_{E1} = 0,3 H auf. Der Rücksprungsteg 40 weist ein oberes Teilprofil 42 und ein unteres Teilprofil 44 auf. Das obere Teilprofil 42 ist im Wesentlichen rechtwinkelig mit dem Oberflansch 34 verbunden, während das untere Teilprofil 44 im Wesentlichen rechtwinkelig mit dem Befestigungssteg 36 verbunden ist.

Im dargestellten Ausführungsbeispiel von Fig. 2b weist lediglich der Oberflansch 34 eine Aufnahmetasche 78 auf, mit dessen Hilfe ein Hammerkopf 90 einer Hammerkopfschraubenverbindung 88 verliersicher aufgenommen werden kann. Der Hammerkopf 90 kann seitlich in die Aufnahmetasche 78 eingeschoben werden, so dass lediglich ein Schraubenschaft 92 durch eine durch einen Rücksprung 80 begrenzte Zugangsöffnung 82 hindurchragen kann. Da der Hammerkopf 90 deutlich größer als die Zugangsöffnung 82 ausgestaltet sein kann, kann der Hammerkopf 90 an der zum Hammerkopf 90 weisen Fläche 84 des Rücksprungs 80 anschlagen. Der Hammerkopf 90 und/oder die Aufnahmetasche 78 können ferner derart in ihrer Breite dimensioniert sein, dass der Hammerkopf 90 zwar seitlich in die Aufnahmetasche 78 eingeschoben werden kann aber innerhalb der Aufnahmetasche 78 nicht verdreht werden kann und der Hammerkopf 90 statt dessen bei einem Verdrehen des Hammerkopf 90 an einer seitlichen Innenfläche 86 der Aufnahmetasche 78 anschlägt, so dass sich eine Verdrehsicherung ergibt. Eine derartige Aufnahmetasche 78 kann auch in dem Unterflansch 32 und/oder in dem Befestigungssteg 36 vorgesehen sein. Aus Gründen der besseren Übersichtlichkeit ist die Aufnahmetasche 78 nicht in dem Unterflansch 32 oder dem Befestigungssteg 36 dargestellt und auch in den übrigen Darstellungen des Profilträgers 14 nicht dargestellt. Selbstverständlich können auch in den übrigen Darstellungen des Profilträgers 14 eine Aufnahmetasche 78 in dem Oberflansch 34 und/oder in dem Unterflansch 32 und/oder in dem Befestigungssteg 36 vorgesehen sein.

Ferner ist (Fig. 2a und Fig. 2b) mit dem Unterflansch 32 ein Standansatz 46 im Wesentlichen rechtwinkelig verbunden, so dass ein unterer Endgrat 48 des Profilträgers im Wesentlichen in das Innere des im Wesentlichen C- und/oder Sigma-förmigen Querschnitts in einen Hohlraum 86 des Profilträgers 14 weist. Entsprechend ist mit dem Oberflansch 34 ein Stützansatz 50 derart verbunden, dass ein oberer Endgrat 52 des Profilträgers 14 nach innen in den Hohlraum 86 weist. Im dargestellten Ausführungsbeispiel ist der Stützansatz 50 unter einen Winkel β = 75° zum Oberflansch angeordnet, so dass die Winkel α und β gleich sind. Der Standansatz 46, der Unterflansch 32, der Befestigungssteg 36, der Rücksprungsteg 40, der Oberflansch 34 und der Stützansatz 50 begrenzen den Hohlraum 86, der zwischen dem Standansatz 46 und dem Stützansatz 50 seitlich geöffnet und dadurch von außen leicht zugänglich ist.

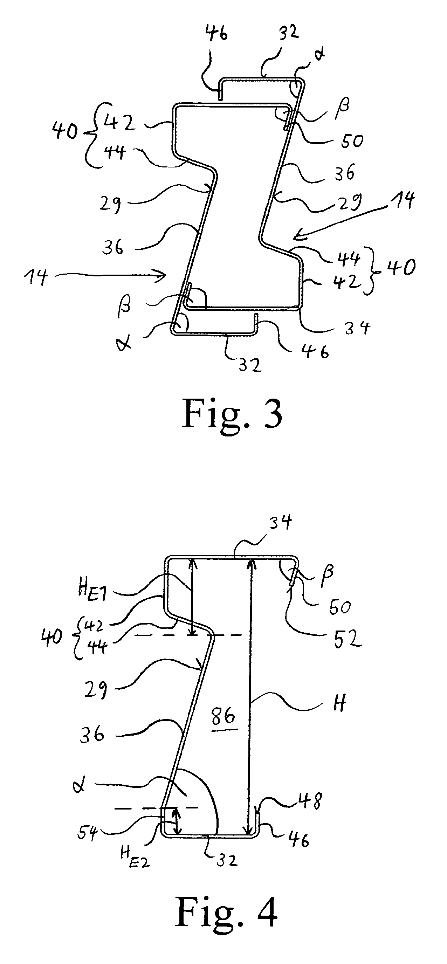

Wie in Fig. 3 dargestellt, können aufgrund der gleichen Winkel α und β zwei Profilträger 14 zum Transport in platzsparender Weise besonders einfach ineinander eingesteckt werden. Der Stützansatz 52 kann dabei flächig an dem Befestigungssteg 36 anliegen. Um noch mehr Platz zu sparen, kann der Standansatz 46 im Vergleich zu dargestellten Ausführungsform verkürzt sein oder ganz entfallen.

Bei der in Fig. 4 dargestellten Ausführungsform des Profilträgers 14 ist im Vergleich zu der in Fig. 2 (Fig. 2a oder Fig. 2b) dargestellten Ausführungsform des Profilträgers 14 zwischen dem Unterflansch 32 und dem Befestigungssteg 36 ein Zwischensteg 54 vorgesehen, der im Wesentlichen senkrecht zum Unterflansch 36 angeordnet ist. Der Zwischensteg 54 weist eine Erstreckung zwischen dem Unterflansch 32 und dem Oberflansch 34 von H_{E2} = 0,09 H auf. Der Zwischensteg 54 kann bei dem Profilträger gemäss Fig. 2a oder Fig. 2b angeordnet werden.

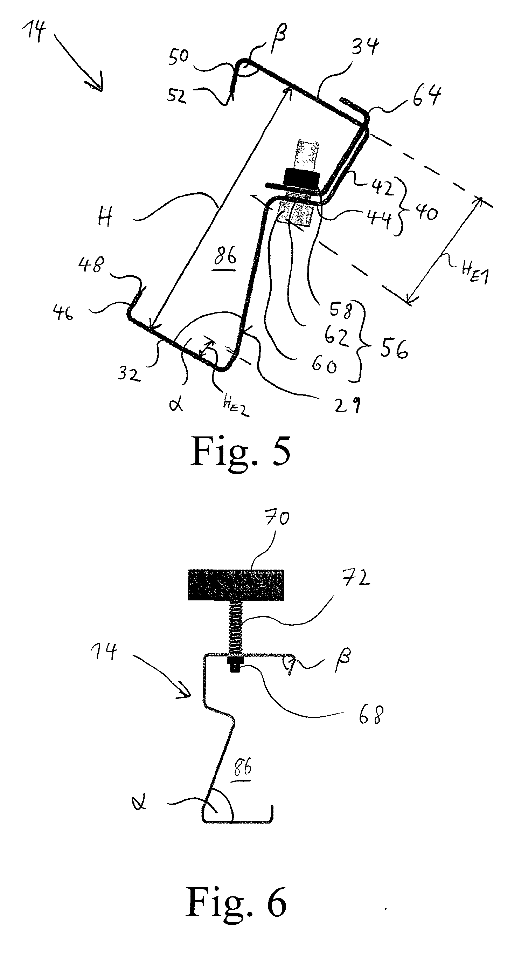

Bei der in Fig. 5 dargestellten Ausführungsform des Profilträgers 14 ist mit dem unteren Teilprofil 44 des Rücksprungprofils 40 eine Schraubenverbindung 56 mit einer Stanzmutter 58 und einer Schraube 60 verbunden, wobei die Schraube 60 mit Hilfe einer Feder 62 federbelastet ist. Durch die Federkraft kann über einen mit der Schraubenverbindung 56 verbundenen Haken 64 eine Kraft auf das Solarpanel 12 oder einem mit dem Solarpanel 12 verbundenen Stützträger 66 ausgeübt werden, beispielsweise um das Solarpanel 12 und/oder den Stützträger 66 provisorisch festzuklemmen bis eine feste Verbindung hergestellt wurde. Ein derartiger Stützträger 66, mit dem Solarpanele 12 verbunden werden können, wird auch als "backrail" bezeichnet. Vorzugsweise ist das Solarpanel 12 mit dem Stützträger 66 ("backrail") durch Kleben verbunden. Eine Klebeverbindung ist besonders bevorzugt, wenn das Solarpanel 12 als Dünnschicht-Solarpanels ausgestaltet ist. Die Stanzmutter 58 ist drehfest mit dem Haken 64 fixiert, so dass es nicht erforderlich ist die Stanzmutter 58 beim Verschrauben mit einem Werkzeug festzuhalten. Anstelle der Stanzmutter 58 kann auch eine Nietmutter, eine andere vorfixierte Mutter oder eine in einer Aufnahmetasche 78 eingesetzte Hammerkopfschraubenverbindung vorgesehen sein. Die Schraubenverbindung und/oder der mit der Schraubenverbindung 56 verbundenen Haken 64 under/oder die Stanzmutter 58 oder Nietmutter oder eine andere vorfixierte Mutter oder eine in einer Aufnahmetasche 78 eingesetzte Hammerkopfschraubenverbindung können bei dem Profilträger gemäss Fig. 2a oder Fig. 2b angeordnet werden.

Bei der in Fig. 6 dargestellten Ausführungsform des Profilträgers 14 gemäss irgendeiner der Ausfürhrungsformen der Erfindung ist über einen Bolzen 68 ein Halter 70 mit dem Profilträger 14 verbunden. Zwischen dem Profilträger 14 und dem Halter 70 ist eine Feder 72 vorgesehen, um eine Klemmkraft von dem Halter 70 auf ein zwischen dem Halter 70 und dem Stützträger 66 angeordnetes Solarpanel 12 ausüben zu können.

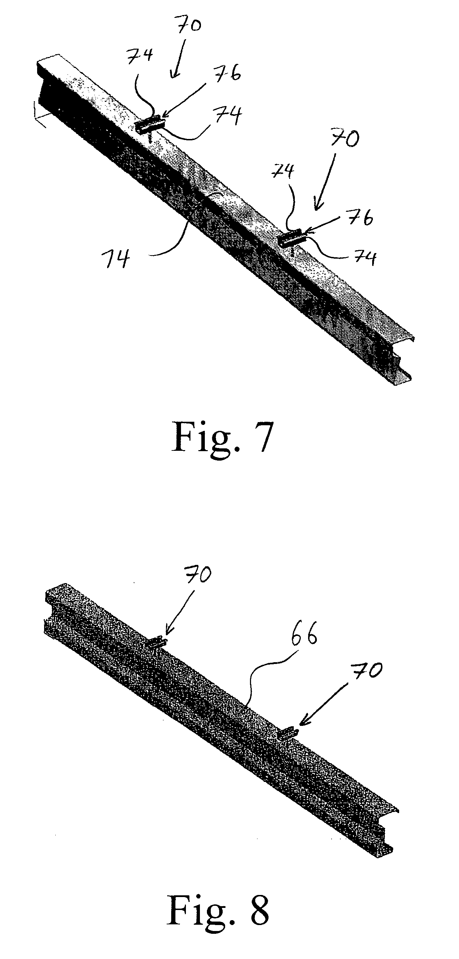

Wie in Fig. 7 dargestellt weist der Halter 70 zwei von einander wegweisende Ansätze 74 auf, zwischen denen ein Kanal 76 in dem Halter 70ausgebildet ist. Über die Ansatz 74 kann auf die entgegen der Schwerkraft weisende Oberfläche des Solarpanels 12 eine Haltekraft ausgeübt werden. Der Halter 70 kann über eine in einer Aufnahmetasche 78 eingesetzte Hammerkopfschraubenverbindung 88 mit dem Profilträger 14 gemäss irgendeiner der Ausfürhrungsformen der Erfindung verbunden sein.

Wie in Fig. 8 dargestellt kann an Stelle der in Fig. 6 und Fig. 7 dargestellten ausführungsbeispielendes Profilträgers 14 ein Stützträger 66 verwendet werden. Der Stützträger weist beispielsweise einen im Wesentlichen Σ-förmigen Querschnitt auf ("Sigma-Profil"). Mit Hilfe mehrerer Stützträger 66 ("backrail") kann insbesondere eine Vielzahl von Solarpanelen 12 insbesondere durch Kleben vormontiert werden und als vormontiertes Modul im Ganzen mit einer geeigneten Anzahl von Profilträgern 14 gemäss irgendeiner der Ausfürhrungsformen der Erfindung verbunden werden. In diesem Fall wird insbesondere die in Fig. 5 dargestellte Ausführungsform des Profilträgers 14 verwendet. Ferner kann der Stützträger 66 über eine in einer Aufnahmetasche 78 eingesetzte Hammerkopfschraubenverbindung 88 mit dem Profilträger 14 verbunden sein.

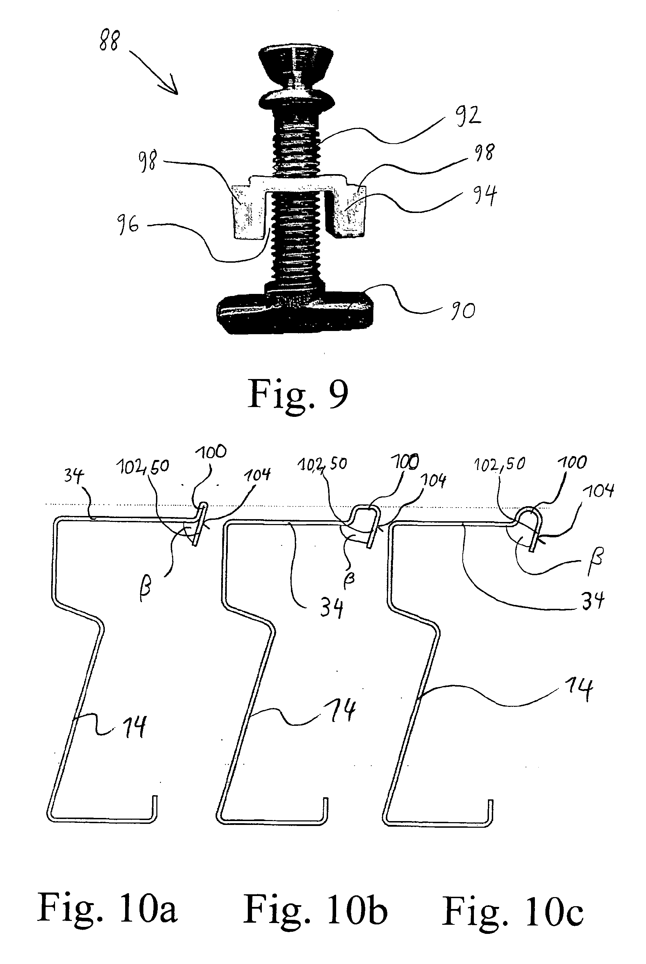

Die in Fig. 9 dargestellte Hammerkopfschraubenverbindung 88 weist einen Hammerkopf 90 auf, der Teil einer Mutter oder einer Schraube sein kann. Der Hammerkopf 90 kann insbesondere seitlich in die Aufnahmetasche 78 des Profilträgers 14 gemäss irgendeiner der Ausfürhrungsformen der Erfindung eingesetzt werden und bei einer Krafteinwirkung in axialer Richtung an einem durch den Rücksprung 80 ausgebildeten Anschlag 84 anschlagen. Mit dem Hammerkopf 90 ist ein Schraubenschaft 92 verbunden, der durch die Zugangsöffnung 82 von der Aufnahmetasche 78 nach außen ragen kann, um den Profilträger 14 mit dem Stützträger 66 oder einem anderen Bauteil zu verbinden. Im dargestellten Ausführungsbeispiel ist ein Verdrehsicherungselement 94 vorgesehen, das entlang des Schraubenschafts 92 in axialer Richtung verschiebbar ist. Das Verdrehsicherungselement 94 weist einen im Wesentlichen U-förmige Aufnahmeschuh 96 auf, der den Hammerkopf 90 verdrehsicher aufnehmen kann, wenn das Verdrehsicherungselement 94 auf den Hammerkopf 90 aufgeschoben wird. Das Verdrehsicherungselement 94 kann ferner derart dimensionier sein, dass das Verdrehsicherungselement 94 verdrehsicher in der Zugangsöffnung 82 eingesetzt ist, wenn das Verdrehsicherungselement 94 auf den Hammerkopf 90 aufgeschoben ist. Zusätzlich oder alternativ kann das Verdrehsicherungselement 94 mindestens einen Clip 98 aufweisen, um das Verdrehsicherungselement 94 in der Zugangsöffnung 82 mit dem Profilträger 14 gemäss irgendeiner der Ausfürhrungsformen der Erfindung verklippsen zu können.

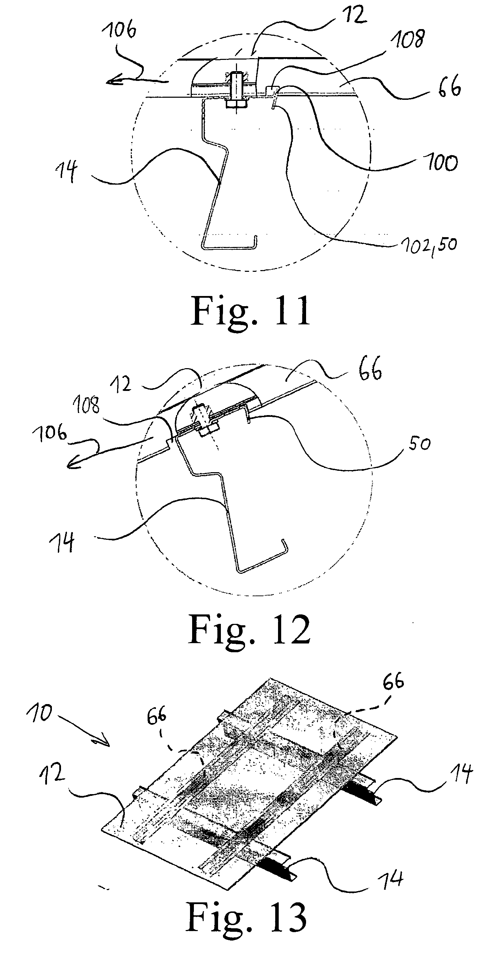

In den Fig. 10a, 10b und 10c sind verschiedene Profilträger 14 gemäss Ausfürhrungsformen der Erfindung dargestellt, bei denen der Oberflansch 34 jeweils eine unterschiedlich geformte Nase 100 aufweist. Die Nase 100 kann beispielsweise als herausgefalteter schmaler Ansatz (Fig. 10a), als im Wesentliche eckige Erstreckung (Fig. 10b) und/oder als gerundete Erstreckung (Fig. 10c) ausgestaltet sein. Die Nase 100 weist einen Ansatz 102 auf, der im dargestellten Ausführungsbeispiel mit dem Stützansatz 50 des Oberflanschs 34 zusammenfällt. Es ist aber auch möglich, dass der Ansatz 102 der Nase 100 gesondert von dem Stützansatz 50 und/oder von dem Standansatz 46 ausgebildet ist. Der Ansatz 102 weist eine Anschlagfläche 104 auf, an die ein Stützträger 66 oder sonstiges zu stützendes Bauteil anschlagen kann. Die Anschlagfläche 104 weist einen Winkel β zum übrigen Oberflansch 34 auf, so dass bei einer Kraft in Hangabtriebsrichtung 106 eine selbstverstärkende Verbindung zwischen dem zu stützenden Bauteil und dem Profilträger 14 auftritt und insbesondere der Stützträger 66 zusätzlich verkeilt werden kann. Hierzu kann der Stützträger 66 eine Aussparung 106 aufweisen, in welche die Nase 100 eingesetzt werden kann, wie in Fig. 11 dargestellt ist. Die Aussparung 106 des Stützträgers 66 kann auch so groß gewählt sein, dass der gesamte Oberflansch 34 in die Aussparung passt und sich der Stützträger 66 in Richtung Hangabtriebskraft 106 an dem Stützansatz 50 abstützen kann, wie in Fig. 12 dargestellt.

Bei der in Fig. 13 dargestellten Stützstruktur 10 sind mindestens zwei Profilträger 14 gemäss irgendeiner der Ausfürhrungsformen der Erfindung mit mindestens zwei Stützträgern 66 verbunden. Die Verbindung kann insbesondere über eine Hammerkopfschraubenverbindung 88 und/oder über eine in eine Aussparung 108 eingesetzte Nase 100 und/oder über einen in eine Aussparung 108 eingesetzten Oberflansch 34 erfolgen. Das Solarpanel 12 ist als Dünnschicht-Solarpanel ("thin-film solar panel") ausgestaltet und vorzugsweise mit den zugeordneten Stützträgern 66 ("backrail") durch Kleben direkt verbunden.

## Patentansprüche

1. Profilträger für eine Stützstruktur (10), insbesondere zum Stützen von Solarpanelen (12), mit
einem Unterflansch (32) zur zumindest teilweisen Anlage an einen Unterträger (16),
einem Oberflansch (34) zur zumindest teilweisen Anlage an ein zu stützendes Bauteil, insbesondere Solarpanel (12) und
einem zur Kraftübertragung von dem Oberflansch (34) zum Unterflansch (32) vorgesehenen Befestigungssteg (36) zur zumindest teilweisen Anlage an ein Verbindungsprofil (18) zur Verbindung des Unterträgers (16) mit dem Profilträger (14), wobei zwischen dem Befestigungssteg (36) und dem Unterflansch (32) ein Winkel α < 90° vorgesehen ist, **dadurch gekennzeichnet, daß** der Unterflansch (32), der Oberflansch (34) und der Befestigungssteg (36) einen gegenüberliegend zum Befestigungssteg (36) geöffneten Hohlraum (86) begrenzen, und
der Befestigungssteg (36) über einen Rücksprungsteg (40) mit dem Oberflansch (34) verbunden ist, so dass bei einem Neigungswinkel γ des Stützstegs (34) zur Horizontalen (26) von 5° ≤ γ ≤ 35°, insbesondere 15° ≤ γ ≤ 25°, bevorzugt γ = 20°± 2°, die Gewichtskraft (28) des Schwerpunkts des Stützstegs (34) in einer vom Unterflansch (32) wegweisenden Richtung zu einer von dem Unterflansch (32) wegweisenden Rückseite (29) des Befestigungsstegs (36) beabstandet verläuft.

2. Profilträger nach Anspruch 1 **dadurch gekennzeichnet, dass** der Rücksprungsteg (40) insbesondere derart dimensioniert ist, dass die Gewichtskraft (28) im Wesentlichen durch einen Befestigungspunkt (24) des Verbindungsprofils (18) mit dem Unterträger (16) verläuft.

3. Profilträger nach Anspruch 1 oder 2 **dadurch gekennzeichnet, dass** der Unterflansch (32) zu dem Oberflansch (34) einen Abstand H aufweist und eine Erstreckung H_{E1} des Rücksprungstegs (40) zwischen dem Unterflansch (32) und dem Oberflansch (34) H_{E1} ≤ H/3, insbesondere 0,2H bis 0,45H beträgt.

4. Profilträger nach einem der Ansprüche 1 bis 3 **dadurch gekennzeichnet, dass** der Unterflansch (32) über einen Zwischensteg (54) mit dem Befestigungssteg (36) verbunden ist, wobei insbesondere zwischen dem Unterflansch (32) und dem Zwischensteg (54) ein Winkel δ von δ = 90°± 2° vorgesehen ist und vorzugsweise der Unterflansch (32) zu dem Oberflansch (34) einen Abstand H aufweist und eine Erstreckung H_{E2} des Zwischenstegs (54) zwischen dem Unterflansch (32) und dem Oberflansch (34) H_{E2} ≤ H/3, insbesondere H_{E2} ≤ H/4 und vorzugsweise H_{E2} ≤ H/10 beträgt.

5. Profilträger nach einem der Ansprüche 1 bis 4 **dadurch gekennzeichnet, dass** als Teil von Verbindungsmitteln (20, 22, 56, 70) zur Verbindung des Profilträgers (14) mit dem Unterträger (16) und/oder dem Verbindungsprofil (18) und/oder dem zu stützenden Bauteil, insbesondere Solarpanel (12), eine drehfest mit dem Profilträger (14) verbundene Mutter, insbesondere eine Stanzmutter und/oder Nietmutter, vorgesehen ist.

6. Profilträger nach einem der Ansprüche 1 bis 5 **dadurch gekennzeichnet, dass** der Profilträger (14) einstückig aus Bandmaterial insbesondere durch Kaltbiegeverfahren, vorzugsweise Kaltprofilieren, Gesenkbiegen und/oder Kaltwalzen hergestellt ist.

7. Profilträger nach einem der Ansprüche 1 bis 5 **dadurch gekennzeichnet, dass** der Oberflansch (34) und/oder der Unterflansch (34) eine Aufnahmetasche (78) zur verliersicheren Aufnahme eines Hammerkopfs (90) einer Hammerkopfschraubenverbindung (88) aufweist, wobei sich die Aufnahmetasche (78) insbesondere über die gesamte Länge des Profilträgers (14) erstreckt.

8. Profilträger nach einem der Ansprüche 1 bis 7 **dadurch gekennzeichnet, dass** der Oberflansch (34) und/oder der Unterflansch (34) eine Nase (100) zum Einsetzen in eine Aussparung (108) eines Stützträgers ("backrail", 66) insbesondere für Solarpanele (12) aufweist.

9. Profilträger nach Anspruch 8 **dadurch gekennzeichnet, dass** die Nase (100) einen zum Hohlraum (86) weisenden Ansatz (102) aufweist, wobei der Ansatz (102) eine Anschlagfläche (104) zum Anschlagen an den Stützträger ("backrail", 66) aufweist.

10. Stützstruktur insbesondere zum Stützen von Solarpanelen (12), mit einem insbesondere als Längsträger verwendetem Unterträger (16), einem insbesondere als Querträger verwendetem Profilträger (14) nach einem der Ansprüche 1 bis 9, wobei der Profilträger (14) direkt mit dem Unterträger (16) verbunden ist, und einem insbesondere als Winkeleisen ausgestaltetes Verbindungsprofil, wobei das Verbindungsprofil (18) direkt mit dem Unterträger (16) und direkt mit dem Befestigungssteg (36) des Profilträgers (14) verbunden ist.

11. Stützstruktur nach Anspruch 10 **dadurch gekennzeichnet, dass** mit dem Oberflansch (34) des Profilträgers (14) ein Solarpanel (12) oder ein mit einem Solarpanel (12) verbundener Stützträger (66) verbunden ist.

12. Stützstruktur nach Anspruch 10 oder 11 **dadurch gekennzeichnet, dass** das Verbindungsprofil (18) über genau einen Befestigungspunkt (24) mit dem Unterträger (16) verbunden ist.

13. Stützstruktur nach einem der Ansprüche 10 bis 12 **dadurch gekennzeichnet, dass** der Unterträger (16) um einen Neigungswinkel γ zur Horizontalen (26) von insbesondere 5° ≤ γ ≤ 35°, vorzugsweise 15° ≤ γ ≤ 25°, besonders bevorzugt γ = 20°± 2° geneigt ist und der Befestigungssteg (18) entgegen der Hangabtriebskraft des zu stützenden Bauteils, insbesondere Solarpanels (12), geneigt ist.

14. Stützstruktur nach einem der Ansprüche 10 bis 13 **dadurch gekennzeichnet, dass** das Verbindungsprofil (18) im Wesentlichen vertikal ausgerichtet ist.

15. Solarpanelanlage zur Nutzung von Solarenergie, mit einer Stützstruktur (10) nach einem der Ansprüche 10 bis 14 und einem mit der Stützstruktur (10), insbesondere durch Kleben, verbundenes Solarpanel (12), vorzugsweise Dünnschicht-Solarpanel.

## Claims

1. A profiled carrier for a support structure (10), in particular for supporting solar panels (12), with
a lower flange (32) for resting at least partially against a lower carrier (16),
an upper flange (34) for resting at least partially against a component to be supported, in particular a solar panel (12) and
a fixing web (36) for resting at least partially against a connecting profile (18) for connecting the lower carrier (16) to the profiled carrier (14), said fixing web being provided for the transfer of force from the upper flange (34) to the lower flange (32), wherein an angle α < 90° is provided between the fixing web (36) and the lower flange (32), **characterised in that** the lower flange (32), the upper flange (34) and the fixing web (36) bound a hollow space (86) opened opposite the fixing web (36), and
the fixing web (36) is connected via a set-back web (40) to the upper flange (34), so that, at an angle of inclination γ of the support web (34) to the horizontal (26) of 5° ≤ γ ≤ 35°, in particular 15° ≤ γ ≤ 25°, preferably γ = 20° ± 2°, the weight force (28) of the centre of gravity of the support web (34) runs spaced apart in a direction pointing away from the lower flange (32) towards a rear side (29) of the fixing web (36), said rear side pointing away from the lower flange (32).

2. The profiled carrier according to claim 1, **characterised in that** the set-back web (40) is dimensioned in particular such that the weight force (28) runs essentially through a fixing point (24) of the connecting profile (18) with the lower carrier (16).

3. The profiled carrier according to claim 1 or 2, **characterised in that** the lower flange (32) has a distance H from the upper flange (34) and an extension H_{E1} of the set-back web (40) between the lower flange (32) and the upper flange (34) amounts to H_{E1} ≤ H/3, in particular 0.2H to 0.45H.

4. The profiled carrier according to any one of claims 1 to 3, **characterised in that** the lower flange (32) is connected via an intermediate web (54) to the fixing web (36), wherein in particular an angle δ of δ = 90° ± 2° is provided between the lower flange (32) and the intermediate web (54) and the lower flange (32) preferably has a distance H from the upper flange (34) and an extension H_{E2} of the intermediate web (54) between the lower flange (32) and the upper flange (34) amounts to H_{E2} ≤ H/3, in particular H_{E2} ≤ H/4 and preferably H_{E2} ≤ H/10.

5. The profiled carrier according to any one of claims 1 to 4, **characterised in that** a nut, in particular a punching nut and/or rivet nut, connected non-rotatably to the profiled carrier (14) is provided as part of connection means (20, 22, 56, 70) for connecting the profiled carrier (14) to the lower carrier (16) and/or the connecting profile (18) and/or the component to be supported, in particular a solar panel (12).

6. The profiled carrier according to any one of claims 1 to 5, **characterised in that** the profiled carrier (14) is produced in one piece from strip material, in particular by a cold bending method, preferably cold profiling, die-bending and/or cold rolling.

7. The profiled carrier according to any one of claims 1 to 5, **characterised in that** the upper flange (34) and/or the lower flange (34) comprises a receiving pocket (78) for the captive accommodation of a hammerhead (90) of a hammerhead screw connection (88), wherein the receiving pocket (78) extends in particular over the entire length of the profiled carrier (14).

8. The profiled carrier according to any one of claims 1 to 7, **characterised in that** the upper flange (34) and/or the lower flange (34) comprises a nose (100) for insertion into a recess (108) of a supporting carrier ("back rail", 66), in particular for solar panels (12).

9. The profiled carrier according to claim 8, **characterised in that** the nose (100) comprises an extension (102) pointing towards the hollow space (86), wherein the extension (102) comprises a stopping face (104) for striking against the supporting carrier ("back rail", 66).

10. A support structure, in particular for supporting solar panels (12), with a lower carrier (16) used in particular as a longitudinal carrier, a profiled carrier (14) according to any one of claims 1 to 9, said profiled carrier being used in particular as a transverse carrier, wherein the profiled carrier (14) is connected directly to the lower carrier (16), and a connecting profile constituted in particular as an angle iron, wherein the connecting profile (18) is connected directly to the lower carrier (16) and directly to the fixing web (36) of the profiled carrier (14).

11. The support structure according to claim 10, **characterised in that** a solar panel (12) or a supporting carrier (66) connected to a solar panel (12) is connected to the upper flange (34) of the profiled carrier (14).

12. The support structure according to claim 10 or 11, **characterised in that** the connecting profile (18) is connected via precisely one fixing point (24) to the lower carrier (16).

13. The support structure according to any one of claims 10 to 12, **characterised in that** the lower carrier (16) is inclined by an angle of inclination γ to the horizontal (26) of in particular 5° ≤ γ ≤ 35°, preferably 15° ≤ γ ≤ 25°, particularly preferably γ = 20° ± 2°, and the fixing web (18) is inclined against the static friction force of the component to be supported, in particular a solar panel (12).

14. The support structure according to any one of claims 10 to 13, **characterised in that** the connecting profile (18) is orientated essentially vertical.

15. A solar panel installation for utilising solar energy, with a support structure (10) according to any one of claims 10 to 14 and a solar panel (12), preferably a thin-layer solar panel, connected to the support structure (10), in particular by gluing.

## Revendications

1. Poutre profilée pour une structure porteuse (10), notamment pour porter des panneaux solaires (12), avec
une aile inférieure (32) pour s'appuyer au moins partiellement contre une poutre inférieure (16),
une aile supérieure (34) pour s'appuyer au moins partiellement contre un élément à supporter, notamment un panneau solaire (12), et
une traverse de fixation (36), prévue pour la transmission de force de l'aile supérieure (34) à l'aile inférieure (32), pour s'appuyer au moins partiellement contre un profilé de liaison (18) destiné à relier la poutre inférieure (16) à la poutre profilée (14), un angle α < 90° étant prévu entre la traverse de fixation (36) et l'aile inférieure (32),
**caractérisée en ce que** l'aile inférieure (32), l'aile supérieure (34) et la traverse de fixation (36) délimitent un espace creux (86) ouvert face à la traverse de fixation (36)
et **en ce que** la traverse de fixation (36) est reliée à l'aile supérieure (34) par l'intermédiaire d'une traverse en saillie (40) de telle sorte que, pour un angle d'inclinaison γ de la traverse porteuse (34) par rapport à l'horizontale (26) de 5° ≤ γ ≤ 35°, notamment de 15° ≤ γ ≤ 25°, de préférence de γ = 20° ± 2°, le poids (28) du centre de gravité de la traverse porteuse (34) s'étend dans une direction s'éloignant de l'aile inférieure (32) vers une face arrière (29), s'éloignant de l'aile inférieure (32), de la traverse de fixation (36).

2. Poutre profilée selon la revendication 1, **caractérisée en ce que** la traverse en saillie (40) est notamment dimensionnée de telle sorte que le poids (28) passe sensiblement par un point de fixation (24) du profilé de liaison (18) avec la poutre inférieure (16).

3. Poutre profilée selon la revendication 1 ou 2, **caractérisée en ce que** l'aile inférieure (32) est à une distance H de l'aile supérieure (34) et **en ce qu'**une dimension H_{E1} de la traverse en saillie (40) entre l'aile inférieure (32) et l'aile supérieure (34) est H_{E1} ≤ H/3, notamment de 0,2 H à 0,45 H.

4. Poutre profilée selon l'une des revendications 1 à 3, **caractérisée en ce que** l'aile inférieure (32) est reliée à la traverse de fixation (36) par l'intermédiaire d'une traverse intermédiaire (54), un angle δ de δ = 90° ± 2° étant prévu notamment entre l'aile inférieure (32) et la traverse intermédiaire (54), l'aile inférieure (32) étant de préférence à une distance H de l'aile supérieure (34) et une dimension H_{E2} de la traverse intermédiaire (54) entre l'aile inférieure (32) et l'aile supérieure (34) étant H_{E2} ≤ H/3, notamment H_{E2} ≤ H/4 et de préférence H_{E2} ≤ H/10.

5. Poutre profilée selon l'une des revendications 1 à 4, **caractérisée en ce qu'**il est prévu comme partie de moyens de liaison (20, 22, 56, 70) pour relier la poutre profilée (14) à la poutre inférieure (16) et/ou au profilé de liaison (18) et/ou à l'élément à supporter, notamment un panneau solaire (12), un écrou, notamment un écrou à poinçonner ou un écrou à river, relié à la poutre profilée (14) de manière solidaire en rotation.

6. Poutre profilée selon l'une des revendications 1 à 5, **caractérisée en ce que** la poutre profilée (14) est fabriquée d'une seule pièce à partir d'un feuillard, notamment par un procédé de pliage à froid, de préférence de profilage à froid, de pliage et/ou de laminage à froid.

7. Poutre profilée selon l'une des revendications 1 à 5, **caractérisée en ce que** l'aile supérieure (34) et/ou l'aile inférieure (32) comportent une poche de logement (78) pour loger, sans risque de perte, une tête rectangulaire (90) d'un assemblage à tête de marteau (88), la poche de logement (78) s'étendant notamment sur toute la longueur de la poutre profilée (14).

8. Poutre profilée selon l'une des revendications 1 à 7, **caractérisée en ce que** l'aile supérieure (34) et/ou l'aile inférieure (32) comportent un tenon (100) destiné à venir dans un évidement (108) d'un support (« backrail », 66) notamment pour des panneaux solaires (12).

9. Poutre profilée selon la revendication 8, **caractérisée en ce que** le tenon (100) comporte une saillie (102) pointant vers l'espace creux (86), la saillie (102) comportant une surface de butée (104) pour assurer une butée contre le support (« backrail », 66).

10. Structure porteuse notamment pour porter des panneaux solaires (12), avec une poutre inférieure (16) utilisée notamment comme poutre longitudinale, avec une poutre profilée (14) conçue selon l'une des revendications 1 à 9 et utilisée notamment comme poutre transversale, la poutre profilée (14) étant assemblée directement à la poutre inférieure (16), et avec un profilé de liaison conçu notamment comme une cornière, le profilé de liaison (18) étant assemblé directement à la poutre inférieure (16) et directement à la traverse de fixation (36) de la poutre profilée (14).

11. Structure porteuse selon la revendication 10, **caractérisée en ce qu'**un panneau solaire (12) ou un support (66) assemblé à un panneau solaire (12) est assemblé à l'aile supérieure (34) de la poutre profilée (14).

12. Structure porteuse selon la revendication 10 ou 11, **caractérisée en ce que** le profilé de liaison (18) est assemblé à la poutre inférieure (16) par l'intermédiaire d'exactement un point de fixation (24).

13. Structure porteuse selon l'une des revendications 10 à 12, **caractérisée en ce que** la poutre inférieure (16) est inclinée d'un angle d'inclinaison γ par rapport à l'horizontale (26), avec en particulier 5° ≤ γ ≤ 35°, notamment 15° ≤ γ ≤ 25°, de préférence γ = 20°± 2°, et **en ce que** la traverse de fixation (18) est inclinée à l'opposé de la force descensionnelle de l'élément à porter, notamment du panneau solaire (12).

14. Structure porteuse selon l'une des revendications 10 à 13, **caractérisée en ce que** le profilé de liaison (18) est orienté globalement verticalement.

15. Installation de panneaux solaires pour l'utilisation de l'énergie solaire, avec une structure porteuse (10) selon l'une des revendications 10 à 14 et avec un panneau solaire (12), de préférence un panneau solaire à couche mince, assemblé à la structure porteuse (10), notamment par collage.
